# EUROPEAN PATENT APPLICATION

(11) **EP 1 127 593 A1**
(43) Date of publication of application: **29.08.2001**
(21) Application number: 01200590.6
(22) Date of filing: 19.02.2001
(51) Int. Cl.: A63F 3/06, B42D 15/00

(54) **Voucher as well as method for issuing and collecting the voucher**

(30) Priority: 21.02.2000 NL 1014440
(71) Applicant: Hulleman, Jacob, 4001 LD Tiel (NL)
(72) Inventor: Hulleman, Jacob, 4001 LD Tiel (NL)
(74) Representative: Verhees, Godefridus Josephus Maria

(57) **Abstract**

A voucher 1 has a value coupon 3 that is provided with a game of chance 15, for example scratch sections 17, with which the spending value 5 of the voucher 1 can be increased. Due to the game of chance 15 this voucher 1 is more attractive than the known vouchers.

The voucher 1 is secured against theft by a public code 19 on the value coupon 3 and a private code 21 that is also delivered, for example on a tear-off coupon 7. The two codes 19, 21 form a unique combination. On the spending of the voucher 1 the private code 21 must be given, after which the recipient of the voucher 1 can verify the combination of the two codes 19, 21 with a central institution.

For electronic payments the voucher can also be virtual. Against payment a unique combination of two codes as well as an associated spending value and chance code are given. On spending both codes must be given. After verification of the combination and the chance code the voucher can then be accepted as payment.

## Description

### BACKGROUND OF THE INVENTION:

### Field of the invention

The invention relates to a voucher, in particular a gift voucher, comprising a value coupon with a spending value, which value coupon is provided with security facilities for security against copying.

### Prior art

Such a voucher is generally known in the form of a gift voucher. The known gift voucher is provided with security facilities in the form of a combination of the type of paper and the printing technique during the production of the gift voucher. The known gift voucher is issued by an institution against payment. There are gift vouchers with various spending values. Against presentation of the gift voucher to this institution the spending value of the gift voucher is paid out. In practice the gift vouchers are issued by the institution to a large number of sales points, which sell the gift vouchers to consumers. They usually give the gift vouchers to relatives, friends and acquaintances. These people can buy products in various shops against presentation of the gift voucher. Then the shopkeepers present the gift vouchers they receive to the institution against payment of the spending value.

### Summary of the invention

An objective of the invention is to provide a voucher of the type described in the preamble that offers more than the known voucher. To this end the voucher according to the invention is characterised in that the value coupon is provided with a game of chance with which the spending value of the voucher can be increased. By the game of chance element the voucher has become more attractive in comparison with the known voucher. So the consumer will be more likely to purchase the voucher according to the invention as a gift for a relative, friend or acquaintance. Increasing the spending value of the voucher can for example also be understood to mean a discount on a purchase or a gift in kind, for example the third course free at a dinner.

It is noted that from US 5.996.997 a game of chance card is known that has sections on it, which can be scratched off to reveal symbols which indicate whether a prize has been won. So this in fact gives the game of chance card a value if the symbols indicate a prize. If this is not the case, the game of chance card has no value. The voucher according to the invention differs from this known game of chance card in that the voucher always has a spending value. This spending value can only be increased if the game on the voucher yields a prize. So it is not so that the spending value can decrease by the game of chance or even can become zero. With the invention there is primarily a voucher regarding which the game element increases its attractiveness, while in the known game of chance card there is only a game of chance.

The same applies to the game of chance card known from US 5.407.199. This card, too, has no spending value but only has a value if the game of chance on it yields a prize.

In addition, from EP-A-0 811 406 a game of chance card is known on which lottery numbers are printed on the card and where there is also a chip on the card in which, if desired, the figures chosen by the player are present in digital form. This card, too, has no spending value, but only has a value if the game on it leads to a prize.

A combination of a voucher with a chance element, in which the spending value ofthe voucher can be increased, forms a surprising and favourable combination ofthe known voucher with the known games of chance cards.

In addition, with respect to giving a lottery ticket as a gift the voucher according to the invention has an attractive advantage, specifically that it also retains a certain value, which is often not the case in a lottery ticket after the drawing.

An embodiment of the voucher according to the invention is characterised in that the game of chance facilities comprise at least one removable section under which a symbol of the game of chance is hidden. The removable section can, for example, be executed as a thin paper or plastic coating that is placed on the value coupon and can be scratched off. Preferably, there are several scratch sections on the value coupon such that the game element becomes more attractive.

Another embodiment of the voucher is characterised in that the security facilities comprise a public code, which is present on the value coupon, and together with a private code forms a unique combination to secure against theft and copying. So the security facilities contain not only elements that make copying of the value coupon difficult, but also elements that make theft unattractive. So the voucher according to the invention is even more attractive than the known voucher. This achieves adequate security against copying and theft. This will be elucidated below. When he buys the voucher the buyer is given a private code, which forms, together with the public code on the value coupon, a unique combination. By demanding the specification of the private code when the voucher is spent, and by verifying these two codes, every form of copying or theft can be prevented.

The above mentioned security system can for example be executed physically because the voucher also has a tear-off coupon that is removably connected to the value coupon, with the private code being on the tear-off coupon.

The invention also relates to a working method for issuing and collecting a physical or virtual voucher.

As far as the working method is concerned, the invention is characterised in that a computer generates a unique combination of two codes as well as an associated chance code, which codes as well as an associated spending value and chance code are given to the payer against payment, and when the two codes are entered into a computer, the combination of the two codes is verified by the computer and the computer checks whether the associated chance code represents a prize, after which the associated spending value, possibly increased if the chance code so indicates, is paid out to the giver. So the voucher can also be issued as a virtual voucher and can be used for electronic payments such as for example via the Internet.

To further increase the security of the voucher, an embodiment of the working method according to the invention is characterised in that after paying out the spending value the combination of the two codes is blocked by the computer so that the voucher cannot be paid out again.

Another embodiment of the working method according to the invention with an even higher attractiveness is characterised in that the validity of the voucher is automatically verified by dialling in to a computer and entering the two codes, after which the computer verifies its validity. After the verification the computer issues a message concerning the validity.

Another embodiment of the working method is characterised in that the paying out of the spending value, possibly increased if the chance code so indicates, takes place automatically by a computer, which during the call recognises the telephone number of the giver and takes the associated bank account number out of a database, after which the computer makes the payment by giro. This makes the working method and the voucher even more attractive. An automatic payment saves considerable administrative procedures and is thus cheaper and faster than the handling of the known voucher.

### Brief description of the drawings

The invention will be elucidated more fully below on the basis of drawings in which embodiments of the working method and the voucher according to the invention are shown. In these drawings:
Figure 1 shows an embodiment of the voucher according to the invention; and
Figure 2 shows a diagram of the working method according to the invention for issuing and collecting a physical or virtual voucher.

### Detailed description of the drawings

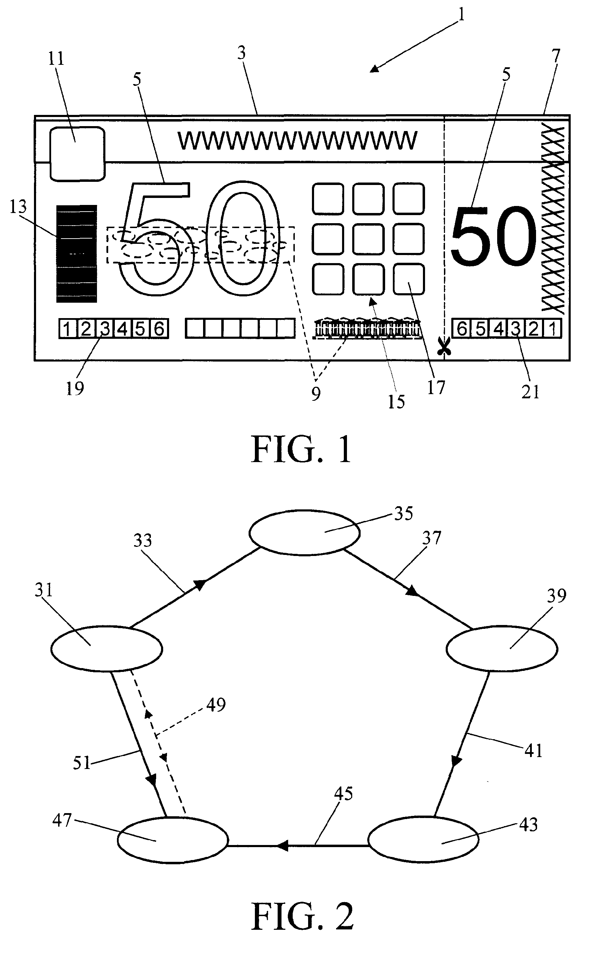

In Figure 1 the voucher 1 according to the invention is shown, in the embodiment of a gift voucher. The voucher 1 consists of a value coupon 3 on which a spending value 5 is specified and to which a tear-off coupon 7 is attached.

The value coupon 3 is provided with security facilities for security against copying. In addition to a combination of paper type with watermark 9 that is difficult to imitate as well as a particular printing technique there is also a hologram 11 and a bar code 13 on the value coupon 3.

The value coupon 3 also has a game of chance 15 with which the spending value of the voucher 1 can be increased. The game of chance 15 consists of nine scratch-off sections 17 under which symbols of the game of chance are hidden. This is generally known and is used with the so-called scratch cards. The attractiveness of the voucher is increased by the game of chance element.

The security facilities also comprise a combination of a public code 19, which is on the value coupon 3, and a private code 21, which is on the tear-off coupon 7. Each voucher has a unique combination of two codes. These code combinations are for one-time use and are generated completely randomly. This code combination forms a security measure against theft and copying.

Figure 2 shows a diagram of an embodiment of the working method according to the invention for issuing and collecting a physical or virtual voucher. The vouchers comprise a unique combination of two codes, a public code and a private code. Each code combination is linked to a spending value. In addition, every code combination can be linked to a game of chance, in the physical embodiment for example in the form of scratch sections and in the virtual embodiment in the form of a chance code.

The vouchers are delivered 33 by a central institution 31 to sales points 35, these can for example be shops and dispensers or virtual sales points on the Internet. The delivery 33 can take place physically by handing over vouchers for example of paper or plastic to for example a physical shop. The delivery 33 can also take place virtually by sending codes via the Internet.

The virtual voucher is a digital representative of the physical voucher, for example in the form of a software programme to be sent in the form of e-mail. The virtual voucher comprises two codes, a spending value and a possible chance code. The codes are generated completely randomly and the combinations are stored in a central, secured database together with the associated spending value and possibly the chance code. The physical voucher, too, is provided with a unique combination of two codes with associated spending value.

An interested person 39 can then buy a voucher 37 against payment, or in the case of an electronic (virtual) voucher, can against payment buy a unique combination of codes. The buyer 39 will, if the voucher is a gift voucher, give the voucher 41 to a beneficiary 43.

Buying and giving the voucher via the Internet goes like this. The buyer/giver 39 logs in at a website that in this case functions as a sales point 35. After filling in the e-mail address of the person for whom the voucher is intended and choosing the desired spending value, the voucher is paid via a secured connection, for example with a credit card or via automatic collection. Then the voucher is given the public code, generated and sent by e-mail 41 to the beneficiary 43. The giver 39 receives the private code. After the giver 39 gives the private code to the beneficiary 43 (per e-mail, telephone or otherwise) the voucher can be spent.

The physical voucher can simply be handed over personally. It is also possible to safely send the voucher by post. That goes like this. The buyer 39 removes a tear-off coupon from the voucher with a private code on it from a value coupon that has a public code. The value coupon is then sent by post. The private code is given by the giver 39 to the beneficiary 43 by telephone, by e-mail, by fax or otherwise. After receipt of the value coupon and the private code by the beneficiary 43 the voucher can be spent. If the value coupon is not received the spending value can be repaid upon specification of the private code.

The voucher can be spent as follows 45. The voucher can simply be spent in the classic manner in a connected shop 47. When collecting the voucher the shopkeeper executes a telephone verification 49 with the central institution 31 in order to prevent a double expenditure (particularly via the Internet or telephone orders). This can be organised in a manner that for the shopkeeper 47 is most efficient with the aid of number recognition. That works like this. When the voucher is accepted a central number is telephoned 49. The central point 31 recognises by the telephone number which shop 47 is requesting verification. The public and private codes are entered. The central point 31 verifies automatically if the combination of the code has been issued and if the voucher has not been collected earlier, for example via the Internet. The shopkeeper 47 receives an approval or a disapproval and a confirmation of the spending value. If it is approved, the code combination is blocked and the spending value, possibly increased if the game of chance so indicates, is paid out automatically 51. This is done by a computer that during the call recognises the telephone number of the giver 47 and picks up the associated bank account number from a database, after which the computer makes the payment by giro.

If the voucher is coupled to a mail-order company or gift catalogue, it is possible to spend the voucher by telephone. That works like this. Via a catalogue (printed or on a website) a choice of article is made. This choice is made known by telephone with a specification of the public and private code. After verification of the codes the article is sent.

The electronic spending of the virtual variant of the voucher in principle goes the same way. The place of a physical shop is in that case taken over by a virtual shop on the Internet. The entering and verifying of codes goes via secured Internet connections.

Although in the above the invention is explained on the basis of the drawings, it should be noted that the invention is in no way limited to the embodiments shown in the drawings. The invention also extends to all embodiments deviating from the embodiments shown in the drawings within the context defined by the claims.

## Claims

1. Voucher, in particular a gift voucher, comprising a value coupon with a spending value, which value coupon is provided with security facilities for security against copying, characterised in that the value coupon is provided with a game of chance with which the spending value of the voucher can be increased.

2. Voucher according to claim 1, characterised in that the game of chance comprises at least one removable section under which a symbol of the game of chance is hidden.

3. Voucher according to claim 1 or 2, characterised in that the security facilities comprise a public code, which is present on the value coupon, and together with a private code forms a unique combination to secure against theft and copying.

4. Voucher according to claim 3, characterised in that the voucher also comprises a tear-off coupon that is removably connected to the value coupon, with the private code being on the tear-off coupon.

5. Working method for issuing and collecting a physical or virtual voucher according to one of the preceding claims, characterised in that a computer generates a unique combination of two codes as well as an associated chance code, which codes and associated spending value and chance code are given to the payer against payment, and that when the codes are entered into a computer, the combination of the two codes is verified by the computer and the computer checks whether the associated chance code represents a prize, after which the associated spending value, possibly increased if the chance code so indicates, is paid out to the giver.

6. Working method according to claim 5, characterised in that after paying out the spending value the combination of the two codes is blocked by the computer so that the voucher cannot be paid out again.

7. Working method according to claim 5 or 6, characterised in that the validity of the voucher is automatically verified by dialling in to a computer and entering the two codes, after which the computer verifies its validity.

8. Working method according to claim 7, characterised in that the paying out of the spending value, possibly increased if the chance code so indicates, takes place automatically by a computer, which during the call recognises the telephone number of the giver and takes the associated bank account number out of a database, after which the computer makes the payment by giro.
